# EUROPÄISCHE PATENTSCHRIFT

(11) **EP 0 599 136 B1**
(45) Veröffentlichungstag und Bekanntmachung des Hinweises auf die Patenterteilung: **10.09.1997**
(21) Anmeldenummer: 93118207.5
(22) Anmeldetag: 10.11.1993
(51) Int. Cl.: C25B 1/00, H01M 4/52

(54) **Verfahren zur Herstellung von reinem Nickelhydroxid sowie dessen Verwendung**
Process for the production of pure nickel hydroxide and its use
Procédé de production d'hydroxide de nickel pur et son utilisation

(30) Priorität: 23.11.1992 DE 4239295
(43) Veröffentlichungstag der Anmeldung: 01.06.1994
(73) Patentinhaber: H.C. Starck GmbH & Co. KG, 38642 Goslar (DE)
(72) Erfinder: Krynitz, Ulrich, Dr., D-38640 Goslar (DE); Naumann, Dirk, Dr., D-38667 Bad Harzburg (DE); Olbrich, Armin, Dr., D-38723 Seesen (DE)
(74) Vertreter: Steiling, Lothar, Dr.

(56) Entgegenhaltungen:
- EP-A- 0 014 111
- EP-A- 0 559 590
- FR-A- 1 441 749
- GB-A- 1 600 750

## Beschreibung

Die vorliegende Erfindung betrifft ein Verfahren zur Herstellung von Nickelhydroxid, welches frei von anionischen Verunreinigungen ist, durch anodische Oxidation von metallischem Nickel in wäßriger Elektrolytlösung in Gegenwart von Sulfationen und Abtrennen des gebildeten Nickelhydroxides.

Nickelhydroxid wird üblicherweise durch die Umsetzung von Nickelsalzen mit Alkalilaugen gewonnen. Dabei werden in einer ersten Stufe die Nickel-Ausgangslösungen durch Aufschluß von metallischem Nickel mit z.B. HNO₃ gewonnen. In einer zweiten Stufe gewinnt man das Hydroxid durch anschließendes Fällen mit Alkalilaugen. Die Nachteile dieser Verfahren sind einerseits die schlechte Filtrierbarkeit des entstehenden Nickelhydroxid-Gels. Auch sind die gebildeten Neutralsalze und die überschüssige Alkalilauge aus dem Niederschlag sehr schwer zu entfernen. Insbesondere aus Nickel-Chlorid- und/oder -Sulfatlösungen scheiden sich nichtstöchiometrische basische Nickelsalze ab, die sich der Umwandlung in reines Hydroxid widersetzen. Bei der Hydroxidfällung fallen außerdem zwangsläufig stöchiometrische Mengen von Neutralsalzen an, die über das Abwasser entsorgt werden müssen.

Die elektrolytische Darstellung von reinem Nickelhydroxid ausgehend von metallischem Nickel in wäßrigen Lösungen von Alkalisalzen ist in den IT-Patent 366 495 beschrieben. Auch hier wird die unerwünschte Bildung der basischen Salze erwähnt, der man durch aufwendige und somit unwirtschaftliche apparative Maßnahmen begegnet.

Die Bildung von Nickelhydroxid bei elektrolytischen Prozessen ist verschiedentlich auch als Nebenreaktion beobachtet worden und wird z.B. in J. Elektrochem. Soc., Vol. 137, No. 6, 1990, Seiten 1696 bis 1702 beschrieben. Hier wird bekundet, daß bei voltametrischen Messungen in schwefelsauren kaliumchloridhaltigen Sulfat-Elektrolytlösungen die anodische Bildung einer Ni(OH)₂-Schicht an Nickelelektroden festgestellt wurde. Die experimentellen Ergebnisse in dieser Arbeit liefern keinen Hinweis, wie man reines Nickelhydroxid im technischen Maßstab auf elektrochemischem Weg herstellen kann.

Aufgabe dieser Erfindung ist die Bereitstellung eines umweltfreundlichen Verfahrens zur Herstellung von Nickelhydroxid, welches die Nachteile der Verfahren des beschriebenen Standes der Technik nicht aufweist.

Überraschenderweise wurde nun gefunden, daß die anodische Oxidation von metallischem Nickel in wäßriger Elektrolytlösung, die zugleich Sulfat und Chlorid enthalten, zu einem Nickelhydroxid-Zwischenprodukt führt, welches wirtschaftlich durch Behandlung mit Alkalilaugen zu reinem Nickelhydroxid umgewandelt werden kann.

Gegenstand dieser Erfindung ist somit ein Verfahren zur Herstellung von Nickelhydroxid, welches frei von anionischen Verunreinigungen ist, durch anodische Oxidation von metallischem Nickel in wäßriger Elektrolytlösung in Gegenwart von Sulfationen und Abtrennen des gebildeten Nickelhydroxides, dadurch gekennzeichnet, daß bei einem pH-Wert zwischen 6 und 13 in Gegenwart von Chloridionen ein chlorid- und sulfathaltiges Nickelhydroxid hergestellt wird, wobei die Sulfationen-Konzentration 0,001 bis 2,0-molar und die Chloridionen-Konzentration 0,3 bis 5-molar ist, und dieses Nickelhydroxid dann durch Nachbehandlung mit Alkalilaugen zum reinen Nickelhydroxid umgewandelt wird.

Das erfindungsgemäße Verfahren kann vorteilhaft bereits mit geringen Konzentrationen an Sulfat- und Chloridionen durchgeführt werden. So ist die Sulfationen-Konzentration besonders bevorzugt 0,01 bis 1,0-molar, die Chloridionen-Konzentration bevorzugt 0,5 bis 2-molar. Besonders gute Ergebnisse werden erzielt, wenn in der Elektrolytlösung ein Überschuß von Chloridionen im Verhältnis zu den Sulfationen herrscht. Bevorzugt beträgt das Molverhältnis von Chlorid- zu Sulfationen 200 zu 1 bis 1 zu 1, besonders bevorzugt 100 zu 1 bis 10 zu 1.

Während der anodischen Oxidation wird in der Elektrolytlösung bevorzugt ein pH-Wert zwischen 8 und 12 aufrechterhalten. Bei niedrigeren pH-Werten findet eine Auflösung des Nickelhydroxides statt, bei sehr hohen pH-Werten tritt normalerweise keine Bildung von basischen Salzen auf. Vielmehr kann sich bei diesen Bedingungen auf der Anode ein festhaftendes Nickelhydroxid bilden, das den Stromdurchgang in der Elektrolysezelle behindert. Außerdem ist auf diese Weise kaum ein homogenes, reprodzierbares Produkt zu gewinnen.

Besonders bevorzugt werden die Chlorid- und Sulfationen beim erfindungsgemäßen Verfahren in Form von Alkali- und/oder Nickelsalzen eingebracht. Diese können vorteilhaft während des gesamten Herstellungsprozesses im Kreis geführt werden.

Für den Fall, daß das erfindungsgemäße reine Nickelhydroxid Dotierungselemente enthalten soll, wie es teilweise an Nickelhydroxid für die Herstellung von Batterien gefordert wird, kann das erfindungsgemäße Verfahren bevorzugt in Gegenwart von Cadmium-, Cobalt-, Magnesium-, Calcium- und/oder Zinksalzen durchgeführt werden, wobei diese bevorzugt als Sulfat- und/oder Chloridsalze eingesetzt werden.

Ebenso ist es vorteilhaft möglich, die Herstellung des reinen Nickelhydroxids in Gegenwart von Cadmium, Cobalt, Magnesium und/oder Zink durchzuführen, wobei diese Elemente als Metallanoden geschaltet sind.

Gute Ausbeuten werden erreicht, wenn Stromdichten von ca. 500 bis 2000 A/m² angelegt werden.

Nach dem erfindungsgemäßen Verfahren ist als Primärprodukt ein sehr wasserhaltiges Gel (ca. 90 % H₂O) erhältlich, welches sich jedoch außerordentlich gut filtrieren läßt. Das Filtrat kann vorteilhaft wieder als Elektrolyt in die Elektrolysezelle zurückgeführt werden.

Dieses Primärprodukt enthält noch wenige Prozent Chlorid und Sulfat, die sich jedoch in der alkalischen Nachbehandlung leicht entfernen lassen. Als Alkalilaugen werden bevorzugt Kalium- und/oder Natronlaugen in einer Konzentration von 10⁻³ bis 2-molar, bevorzugt 10⁻² bis 0,5-molar, eingesetzt, wobei die benötigte Lauge vorteilhaft ebenfalls im Kreislauf geführt wird.

Die erfindungsgemäße Nachbehandlung kann besonders wirtschaftlich bei Temperaturen zwischen 20 und 80°C in einer Zeit von 1 bis 48 Stunden durchgeführt werden.

In der Bilanz wird also nur die Menge Neutralsalz an das Abwasser abgegeben, die als Verunreinigung im Nickelhydroxid enthalten ist. Bezogen auf die konventionellen Verfahren zur Herstellung von Nickelhydroxid durch Fällung aus Nickelsalzen bedeutet die erfindungsgemäße elektrochemische Darstellung eine Verminderung des Neutralsalzaufkommens um mindestens 90 %. Das erfindungsgemäße Verfahren verläuft verfahrenstechnisch besonders einfach, da es ohne den Einsatz von Membranen oder Diaphragmen auskommt.

Das erfindungsgemäß hergestellte reine Nickelhydroxid erfüllt in hervorragender Weise die Anforderungen, die an ein Anodenmaterial in Nickel-Cadmium- und/oder Nickel-Hydrid-Batterien gestellt werden. Es weist eine hohe Schüttdichte und Klopfdichte auf, wodurch eine hohe volumenspezifische Speicherkapazität in der Batterie erzielt werden kann. Weiterhin sind anionische Verunreinigungen, die die elektrochemischen Eigenschaften der Batterien negativ beeinflussen können, nur in sehr geringen Konzentrationen, vorzugsweise weniger als 0,2 %, vorhanden. Weitere physikalische Kenndaten sind z.B. eine hohe spezifische Oberfläche des Nickelhydroxids und eine hohe Halbwertsbreite des 101-Röntgenbeugungsreflexes des Nickelhydroxides, die Aussagen über den Kristallisationsgrad zuläßt.

Das erfindungsgemäß hergestellte Nickelhydroxid ist gut geeignet als Anodenmaterial in Nickel-Cadmium- und/oder Nickel-Hydrid-Batterien.

Im folgenden wird die Erfindung beispielhaft erläutert, ohne daß hierin eine Einschränkung zu sehen ist.

### Vergleichsbeispiel

15 g NaCl und 1 g NiCl₂ · 6 H₂O wurden in 300 ml Wasser gelöst. Bei Raumtemperatur wurde unter Rühren bei 4 Volt und einer Stromdichte von 1200 A/m² elektrolysiert. Es entstand ein schnell sedimentierendes Gel, das nach NaOH-Behandlung (pH 13,5) ein Nickelhydroxidprodukt mit einem Chloridgehalt von 0,4 % ergab.

### Beispiel 1

### a) Elektrolyse

Ein Elektrolysereaktor, bestehend aus einer Elektrolysezelle (70 l) wurde mit 200 l Kochsalzlösung (50 g NaCl/l) gefüllt und die Elektrolytlösung mittels einer Kreiselpumpe zwischen beiden Behältern umgepumpt. In die Elektrolysezelle wurden 2 Tantalkörbe eingehängt, deren Seitenflächen als Sieb ausgebildet und mit Ni-Briketts gefüllt waren. Die Tantalkörbe wurden als Anode geschaltet und gegenüber den Seitenflächen wurden als Kathode geschaltete Reinnickelbleche angeordnet, so daß die Gesamtelektrodenfläche 0,5 m² betrug. Es wurde elektrolysiert mit 4,2 V und 500 A, bei einer Stromdichte von 1000 A/m². Während der Elektrolyse wurden pro Stunde 200 ml einer Lösung von Nickelsulfat und Cobaltsulfat (250 g NiSO₄ · 7H₂O/l; 250 g/l CoSO₄ · 7H₂O) kontinuierlich in die Elektrolysezelle gefördert.

Nach 5 h wurden aus dem Umlaufgefäß kontinuierlich 40 l/h der entstandenen Suspension herausgefördert und gleichzeitig frische Kochsalzlösung in die Elektrolysezelle gepumpt, so daß das Flüssigkeitsvolumen in dem Elektrolysereaktor konstant blieb. Die Suspension wurde anschließend batchweise filtriert und im weiteren Verlauf der Elektrolyse dies Filtrat anstelle der frischen Kochsalzlösung in die Elektrolysezelle zurückgefördert. Somit wurde die zusätzliche Kochsalzlösung nur in der Anfangsphase des kontinuierlichen Betriebes gebraucht, wonach sich dann bei stationärem Betrieb des Reaktors ein geschlossener Kreislauf einstellte. Die Suspension ließ sich gut filtrieren und man erhielt ein gelförmiges Primärprodukt mit einem Wassergehalt von durchschnittlich 90 %. Das hiermit ausgeschleppte Wasser wurde dem System wieder als Waschwasser für das gelförmige Primärprodukt zugeführt. Die chemische Analyse ergab im Durchschnitt einen Sulfatgehalt von 1,8 % und einen Chloridgehalt von 2 % im getrockneten Gel. Die Versuchsdauer betrug insgesamt 105 h. Während des kontinuierlichen Betriebes wurden in dieser Zeit insgesamt 870 kg gelförmiges Primärprodukt gewonnen.

### b) Konditionierung in NaOH

200 kg des feuchten gelförmigen Primärproduktes aus dem Elektrolysereaktor wurden ein einen beheizten Doppelmantelreaktor mit 200 l Wasser durch intensives Rühren fein dispergiert. Anschließend wurde mit NaOH auf pH 13,7 eingestellt und die Suspension unter Rühren auf 80°C erhitzt und 6 h auf dieser Temperatur gehalten.

Danach wurde über die Nutsche filtriert und das Produkt aus der Nutsche mit Wasser gewaschen. Nach dem Trocknen im Trockenschrank erhielt man 19,7 kg Nickelhydroxid mit einem Co-Gehalt von 1 %. Die anionischen Verunreinigungen betrugen weniger als 500 ppm. Die Schüttdichte lag bei 1,3 g/cm³ und die Klopfdichte bei 1,8 g/cm³. Die spezifische BET-Oberfläche (gemessen nach der N₂-Einpunkt-Methode) zeigte den sehr hohen Wert von 88 m² /g. Die Halbwertsbreite des 101 Reflexes war 2,0.

## Patentansprüche

1. Verfahren zur Herstellung von reinem Nickelhydroxid, welches frei von anionischen Verunreinigungen ist, durch anodische Oxidation von metallischem Nickel in wäßriger Elektrolytlösung in Gegenwart von Sulfationen und Abtrennen des gebildeten Nickelhydroxides, dadurch gekennzeichnet, daß bei einem pH-Wert zwischen 6 und 13 in Gegenwart von Chloridionen ein chlorid- und sulfathaltiges Nickelhydroxid hergestellt wird, wobei die Sulfationen-Konzentration 0,001 bis 2,0-molar und die Chloridionen-Konzentration 0,3 bis 5-molar ist, und dieses Nickelhydroxid dann durch Nachbehandlung mit Alkalilaugen zum reinen Nickel hydroxid umgewandelt wird.

2. Verfahren gemäß Anspruch 1, dadurch gekennzeichnet, daß die Sulfationen-Konzentration 0,01 bis 1,0-molar ist.

3. Verfahren gemäß einem der Ansprüche 1 oder 2, dadurch gekennzeichnet, daß die Chloridionen-Konzentration 0,5 bis 2-molar ist.

4. Verfahren gemäß einem oder mehreren der Ansprüche 1 bis 3, dadurch gekennzeichnet, daß das Molverhältnis von Chlorid zu Sulfationen 200 zu 1 bis 1 zu 1, bevorzugt 100 zu 1 bis 10 zu 1, beträgt.

5. Verfahren gemäß einem oder mehreren der Ansprüche 1 bis 4, dadurch gekennzeichnet, daß während der anodischen Oxidation in der Elektrolytlösung ein pH-Wert zwischen 8 und 12 aufrechterhalten wird.

6. Verfahren gemäß einem oder mehreren der Ansprüche 1 bis 5, dadurch gekennzeichnet, daß die Sulfat- und Chloridionen in Form von Alkali- und/oder Nickelsalzen eingebracht werden.

7. Verfahren gemäß einem oder mehreren der Ansprüche 1 bis 6, dadurch gekennzeichnet, daß die Herstellung des Nickelhydroxids in Gegenwart von Cadmium-, Cobalt-, Magnesium-, Calcium- und/oder Zinksalzen durchgeführt wird, wobei diese bevorzugt als Sulfat- und/oder Chloridsalze eingesetzt werden.

8. Verfahren gemäß einem oder mehreren der Ansprüche 1 bis 6, dadurch gekennzeichnet, daß die Herstellung des Nickelhydroxids in Gegenwart von Cadmium, Cobalt, Magnesium und/oder Zink durchgeführt wird, wobei diese Elemente als Metallanoden geschaltet sind.

9. Verfahren gemäß einem oder mehreren der Ansprüche 1 bis 8, dadurch gekennzeichnet, daß als Alkalilaugen Kalium- und/oder Natronlaugen in einer Konzentration von 10⁻³ bis 2-molar, bevorzugt 10⁻² bis 0,5-molar, eingesetzt werden.

10. Verfahren gemäß Anspruch 9, dadurch gekennzeichnet, daß die Nachbehandlung bei Temperaturen zwischen 20 und 80°C in einer Zeit von 1 bis 48 Stunden durchgeführt wird.

## Claims

1. A process for the production of pure nickel hydroxide, which is free of anionic impurities, by anodic oxidation of metallic nickel in aqueous electrolyte solution in the presence of sulphate ions and removal of the nickel hydroxide formed, characterised in that a nickel hydroxide containing chloride and sulphate is prepared at a pH value of between 6 and 13 in the presence of chloride ions, wherein the sulphate ion concentration is from 0.001 to 2.0 molar and the chloride ion concentration is from 0.3 to 5 molar, and this nickel hydroxide is then converted into pure nickel hydroxide by aftertreatment with alkali metal hydroxide solutions.

2. A process according to claim 1, characterised in that the sulphate ion concentration is from 0.01 to 1.0 molar.

3. A process according to either one of claims 1 or 2, characterised in that the chloride ion concentration is from 0.5 to 2 molar.

4. A process according to one or more of claims 1 to 3, characterised in that the molar ratio of chloride to sulphate ions is from 200:1 to 1:1, preferably from 100:1 to 10:1.

5. A process according to one or more of claims 1 to 4, characterised in that a pH value of between 8 and 12 is maintained in the electrolyte solution during anodic oxidation.

6. A process according to one or more of claims 1 to 5, characterised in that the sulphate and chloride ions are introduced in the form of alkali metal and/or nickel salts.

7. A process according to one or more of claims 1 to 6, characterised in that preparation of the nickel hydroxide is carried out in the presence of cadmium, cobalt, magnesium, calcium and/or zinc salts, preferably used as sulphate and/or chloride salts.

8. A process according to one or more of claims 1 to 6, characterised in that preparation of the nickel hydroxide is carried out in the presence of cadmium, cobalt, magnesium and/or zinc, wherein these elements are connected as metal anodes.

9. A process according to one or more of claims 1 to 8, characterised in that potassium and/or sodium hydroxide solutions in a concentration of from 10⁻³ to 2 molar, preferably from 10⁻² to 0.5 molar, are used as alkali metal hydroxide solutions.

10. A process according to claim 9, characterised in that the aftertreatment is carried out at temperatures of between 20 and 80°C over a period of from 1 to 48 hours.

## Revendications

1. Procédé de préparation d'hydroxyde de nickel pur qui est exempt d'impuretés anioniques, par oxydation anodique de nickel métallique en solution aqueuse d'électrolyte en présence d'ions sulfates et séparation de l'hydroxyde de nickel formé, caractérisé en ce qu'à un pH compris entre 6 et 13 en présence d'ions chlorures, on prépare un hydroxyde de nickel contenant du chlorure et du sulfate, où la concentration en ions sulfates est comprise entre 0,001 et 2,0 molaires et la concentration en ions chlorures est comprise entre 0,3 et 5 molaires, et on transforme ensuite cet hydroxyde de nickel pur par post-traitement avec des solutions de bases alcalines en hydroxyde de nickel pur.

2. Procédé selon la revendication 1, caractérisé en ce que la concentration en ions sulfates est 0,01 à 1,0 molaire.

3. Procédé selon l'une des revendications 1 ou 2, caractérisé en ce que la concentration des ions chlorures est 0,5 à 2 molaires.

4. Procédé selon l'une ou plusieurs des revendications 1 à 3, caractérisé en ce que le rapport molaire des ions chlorures aux ions sulfates est 200 pour 1 jusqu'à 1 pour 1, de préférence 100 pour 1 jusqu'à 10 pour 1.

5. Procédé selon l'une ou plusieurs des revendications 1 à 4, caractérisé en ce que pendant l'oxydation anodique dans la solution d'électrolyte, on maintient un pH compris entre 8 et 12.

6. Procédé selon l'une ou plusieurs des revendications 1 à 5, caractérisé en ce qu'on incorpore les ions sulfates et chlorures sous la forme de sels de métaux alcalins et/ou de nickel.

7. Procédé selon l'une ou plusieurs des revendications 1 à 6, caractérisé en ce que la préparation de l'hydroxyde de nickel a lieu en présence de sels de cadmium, de cobalt, de magnésium, de calcium et/ou de zinc, où on préfère les utiliser sous la forme de sels sulfates et/ou chlorures.

8. Procédé selon l'une ou plusieurs des revendications 1 à 6, caractérisé en ce qu'on réalise la préparation de l'hydroxyde de nickel en présence de cadmium, cobalt, magnésium et/ou de zinc, où ces éléments sont présents sous forme d'anodes de métal.

9. Procédé selon l'une ou plusieurs des revendications 1 à 8, caractérisé en ce qu'on utilise comme solutions de bases alcalines des solutions de potasse et/ou de soude en une concentration de 10⁻³ à 2 molaires, de préférence 10⁻² à 0,5 molaire.

10. Procédé selon la revendication 9, caractérisé en ce qu'on réalise le post-traitement à des températures comprises entre 20 et 80°C sur une période de 1 à 48 h.
